# EUROPEAN PATENT SPECIFICATION

(11) **EP 2 552 990 B1**
(45) Date of publication and mention of the grant of the patent: **19.04.2017**
(21) Application number: 11709308.8
(22) Date of filing: 15.03.2011
(51) Int. Cl.: C08G 18/69, C08G 18/10, C08G 18/32, C08G 18/42, C08G 18/76

(54) **POLYURETHANE/POLYUREA SPRAY ELASTOMERS**
POLYURETHAN/POLYHARNSTOFF-SPRÜHELASTOMERE
ELASTOMÈRES DE POLYURÉTHANE/POLYURÉE À PULVÉRISER

(30) Priority: 31.03.2010 US 319301 P
(43) Date of publication of application: 06.02.2013
(73) Proprietor: Dow Global Technologies LLC, Midland, MI 48674 (US)
(72) Inventor: ANATER, Mark, Marietta, GA 30066 (US); MUELLER, Gerhard, Adlington Lancashire SK10 4NH (GB)
(74) Representative: Beck Greener
(86) International application number: PCT/US2011/028479
(87) International publication number: WO 2011/123241

(56) References cited:
- WO-A1-2009/039130
- WO-A1-2009/039145
- WO-A1-2009/129393
- US-A- 3 362 921

## Description

### CROSS-REFERENCE TO RELATED APPLICATIONS

This application claims benefit of U.S. Provisional Patent Application Ser. No. 61/319,301, filed March 31, 2010, entitled "POLYURETHANE/POLYUREA SPRAY ELASTOMERS".

### FIELD OF THE INVENTION

Embodiments of the invention relate to polyurethane spray elastomers, more specifically to spray elastomers using secondary amine chain extenders.

### BACKGROUND OF THE INVENTION

Spray elastomer systems are commonly recognized as coating materials, with aliphatic and aromatic isocyanate spray polyurethane/polyurea systems being useful when employed in this capacity. This two-component technology is based on an isocyanate quasi-preoplymer, a polyol component which also includes an amine chain extender. Conventional materials used as the polyol are typically polyether polyols, which may have low performance in high corrosion/temperature environments. Polyols based on polybutadiene and natural oils may be used and may result in coating materials which have good chemical/thermal resistance, but low tensile properties. Therefore, there is a need for spray elastomer systems based on polyols from polybutadiene and natural oils which may have enhanced tensile strength.

### SUMMARY OF THE INVENTION

Embodiments of the present invention provide for spray elastomer systems made using on polybutadiene based polyols (PBDP) and/or and natural oil based polyols (NOBP).

One embodiment of the invention provides for an elastomer which is the reaction product of at least a first polyol composition, which includes at least one NOBP and at least one aliphatic or aromatic chain extender having at least two secondary amine groups, and at least a first isocyanate terminated prepolymer which is the reaction product of at least one isocyanate and at least one second polyol composition comprising at least one NOBP. The elastomer is a spray elastomer comprising both polyurethane and polyurea linkages, and the elastomer has at least one of a Shore A hardness of at least 92, a Shore D hardness of at least about 40, a Tensile strenght of at least 1250 psi, and a Tear strength of at least 150 pli.

Another embodiment of the invention provides for an elastomer whic the reaction product of at least a first polyol composition, which includes at least a PBDP and at least one aliphatic or aromatic chain extender having at least two secondary amine groups and at least a first isocyanate terminated prepolymer which is the reaction product of at least one isocyanate and at least one second polyol composition comprising at least one PBDP. The elastomer is a spray elastomer comprising both polyurethane and polyurea linkages, and the elastomer has at least one of a Shore A hardness of at least 95, a Shore D hardness of at least about 40, a Tensile strength of at least 2200 psi, an elongation at break of at least 250 and a Tear strength of at least 200 pli.

The at least one natural oil based polyol may include at least one of a hydroxymethylated fatty acid and a hydroxymethylated fatty acid ester.

The at least one natural oil based polyol may include the reaction product of at least one of a hydroxymethylated fatty acid and a hydroxymethylated fatty acid ester and an initiator compound having a OH functionality, primary amine functionality, secondary amine functionality, or combination OH, primary, or secondary amine functionality, of between about 2 and about 4.

The at least one polybutadiene based polyol may be formed from conjugated butadiene and have at least two hydroxyl groups in the molecule, and have a number average molecular weight from 500 to 10,000 g /mol.

### DESCRIPTION OF EMBODIMENTS OF THE INVENTION

Embodiments of the present invention provide for spray elastomer systems made using on polybutadiene based polyols (PBDP) and/or and natural oil based polyols (NOBP). The spray elastomer systems are a so-called two component elastomers, as they are made from reacting at least a first polyol composition with at least one prepolymer composition. The prepolymer composition may have at least one urethane group, and may be the reaction product of at least one isocyanate and at least a second polyol composition. The polyols of the first polyol composition and the second polyol composition may be the same or different, with at least one, or both, of the first or second polyol compositions including at least one natural oil based polyol (NOBP) and/or a polybutadiene based polyol (PBDP). Additionally, the first polyol composition includes at least one aliphatic or aromatic chain extender having at least two secondary amine groups.

Natural oil based polyols (NOBP) are polyols based on or derived from renewable feedstock resources such as natural plant vegetable seed oils. The renewable feedstock resources may also include genetically modified (GMO) plant vegetable seed oils and/or animal source fats. Such oils and/or fats are generally comprised of triglycerides, that is, fatty acids linked together with glycerol. Preferred are vegetable oils that have at least about 70 percent unsaturated fatty acids in the triglyceride. Preferably the natural product contains at least about 85 percent by weight unsaturated fatty acids. Examples of preferred vegetable oils include, for example, those from castor, soybean, olive, peanut, rapeseed, corn, sesame, cotton, canola, safflower, linseed, palm, grapeseed, black caraway, pumpkin kernel, borage seed, wood germ, apricot kernel, pistachio, almond, macadamia nut, avocado, sea buckthorn, hemp, hazelnut, evening primrose, wild rose, thistle, walnut, sunflower, jatropha seed oils, or a combination thereof. Examples of animal products include lard, beef tallow, fish oils and mixtures thereof. Additionally, oils obtained from organisms such as algae may also be used. A combination of vegetable, algae, and animal based oils/fats may also be used.

For use in the production of polyurethane products, the natural material may be modified to give the material isocyanate reactive groups or to increase the number of isocyanate reactive groups on the material. Preferably such reactive groups are a hydroxyl group.

The modified natural oil derived polyols may be obtained by a multi-step process wherein the animal or vegetable oils/fats are subjected to transesterification and the constituent fatty acids recovered. This step is followed by hydroformylating carbon-carbon double bonds in the constituent fatty acids followed by reduction to form hydroxymethyl groups. Suitable hydroformylation/reduction methods are described in U. S. Patent Nos. 4,731,486, 4,633,021, and 7,615,658, for example. The hydroxymethylated fatty acids or esters thereof are herein labeled "monomers" which form one of the building blocks for the natural oil based polyol. The monomers may be a single kind of hydroxymethylated fatty acid and/or hydroxymethylated fatty acid methyl ester, such as hydroxymethylated oleic acid or methylester thereof, hydroxymethylated linoleic acid or methylester thereof, hydroxymethylated linolenic acid or methylester thereof, α- and γ-linolenic acid or methyl ester thereof, myristoleic acid or methyl ester thereof, palmitoleic acid or methyl ester thereof, oleic acid or methyl ester thereof, vaccenic acid or methyl ester thereof, petroselinic acid or methyl ester thereof, gadoleic acid or methyl ester thereof, erucic acid or methyl ester thereof, nervonic acid or methyl ester thereof, stearidonic acid or methyl ester thereof, arachidonic acid or methyl ester thereof, timnodonic acid or methyl ester thereof, clupanodonic acid or methyl ester thereof, cervonic acid or methyl ester thereof, or hydroxymethylated ricinoleic acid or methylester thereof. In one embodiment, the monomer is hydroformulated methyloelate. Alternatively, the monomer may be the product of hydroformulating the mixture of fatty acids recovered from transesterifaction process of the animal or vegetable oils/fats to form hydroxymethylated fatty acids or methyl esters thereof. In one embodiment the monomer is hydroxymethylated soy bean fatty acids or methyl esters thereof which may have an average OH functionality of between about 0.9 and about 1.1 per fatty acid, preferably, the functionality is about 1. In another embodiment the monomer is castor bean fatty acids. In another embodiment, the monomer may be a mixture of selected hydroxymethylated fatty acids or methylesters thereof.

Alternatively, in other embodiments, at least one NOBP may be the polyol obtained by reacting the hydroxymethylated monomer with an appropriate initiator compound to form a polyester or polyether/polyester polyol. Such a multi-step process is commonly known in the art, and is described, for example, in PCT publication Nos. WO 2004/096882 and 2004/096883. The multi-step process results in the production of a polyol with both hydrophobic and hydrophilic moieties, which results in enhanced miscibility with both water and conventional petroleum-based polyols.

The initiator for use in the multi-step process for the production of the natural oil derived polyols may be any initiator used in the production of conventional petroleum-based polyols. Preferably the initiator is selected from the group consisting of neopentylglycol; 1,2-propylene glycol; trimethylolpropane; pentaerythritol; sorbitol; sucrose; glycerol; aminoalcohols such as ethanolamine, diethanolamine, and triethanolamine; alkanediols such as 1,6-hexanediol, 1,4-butanediol; 1,4-cyclohexane diol; 1,3-cyclohexanedimethanol, 1,4-cyclohexanedimethanol, 2,5-hexanediol; ethylene glycol; diethylene glycol, triethylene glycol; bis-3-aminopropyl methylamine; ethylene diamine; diethylene triamine; 9(1)-hydroxymethyloctadecanol, 1,4-bishydroxymethylcyclohexane; 8,8-bis(hydroxymethyl)tricyclo[5,2,1,0^{2,6}]decene; Dimerol alcohol (36 carbon diol available from Henkel Corporation); hydrogenated bisphenol; 9,9(10,10)-bishydroxymethyloctadecanol; 1,2,6-hexanetriol and combination thereof. Preferably the initiator is selected from the group consisting of glycerol; ethylene glycol; 1,2-propylene glycol; trimethylolpropane; ethylene diamine; pentaerythritol; diethylene triamine; sorbitol; sucrose; or any of the aforementioned where at least one of the alcohol or amine groups present therein has been reacted with ethylene oxide, propylene oxide or mixture thereof; and combination thereof. Preferably, the initiator is glycerol, pentaerythritol, sucrose, sorbitol, and/or mixture thereof. In one embodiment, the initiator is a mixture of 1,3-cyclohexanedimethanol and 1,4-cyclohexanedimethanol and is commercially available under the trade name UNOXOL from The Dow Chemical Company which is an approximate 1:1 mixture of (*cis, trans*) 1,3-cyclohexanedimethanol and (*cis, trans*) 1,4-cyclohexanedimethanol.

Other initiators include other linear and cyclic compounds containing an amine. Exemplary polyamine initiators include ethylene diamine, neopentyldiamine, 1,6-diaminohexane; bisaminomethyltricyclodecane; bisaminocyclohexane; diethylene triamine; bis-3-aminopropyl methylamine; triethylene tetramine various isomers of toluene diamine; diphenylmethane diamine; N-methyl-1,2-ethanediamine, N-Methyl-1,3-propanediamine, N,N-dimethyl-1,3-diaminopropane, N,N-dimethylethanolamine, 3,3'-diamino-N-methyldipropylamine, N,N-dimethyldipropylenetriamine, aminopropyl-imidazole.

In one embodiment, the initiators are alkoxlyated with ethylene oxide, propylene oxide, or a mixture of ethylene and at least one other alkylene oxide to give an alkoxylated initiator with a molecular weight between about 200 and about 6000, preferably between about 500 and about 5000. In one embodiment the initiator has a molecular weight of about 550, in another embodiment the molecular weight is about 625, and in yet another embodiment the initiator has a molecular weight of about 4600.

In one embodiment, at least one initiator is a polyether initiator having an equivalent weight of at least about 400 or an average at least about 9.5 ether groups per active hydrogen group, such initiators are described in copending Patent Application No. PCT/US09/37751, filed on March 20, 2009, entitled "Polyether Natural Oil Polyols and Polymers Thereof".

The ether groups of the polyether initiator may be in poly(alkylene oxide) chains, such as in poly(propylene oxide) or poly(ethylene oxide) or a combination thereof. In one embodiment, the ether groups may be in a diblock structure of poly(propylene oxide) capped with poly(ethylene oxide).

In one embodiment, a NOBP is made with an initiator or combination of initiators having an average equivalent weight of between about 400 and about 3000 per active hydrogen group. All individual values and subranges between about 400 and about 3000 per active hydrogen group are included herein and disclosed herein; for example, the average equivalent weight can be from a lower limit of about 400, 450, 480, 500, 550, 600, 650, 700, 800, 900, 1000, 1200, or 1300 to an upper limit of about 1500, 1750, 2000, 2250, 2500, 2750, or 3000 per active hydrogen group.

Thus, in this embodiment, at least two of the natural oil based monomers are separated by a molecular structure having an average molecular weight of between about 1250 Daltons and about 6000 Daltons. All individual values and subranges between about 1250 Daltons and about 6000 Daltons are included herein and disclosed herein; for example, the average molecular weight can be from a lower limit of about 1250, 1500, 1750, 2000, 2250, 2500, 2750, 3000, or Daltons to an upper limit of about 3000, 3500, 4000, 4500, 5000, 5500, or 6000 Daltons.

To form the polyether initiator, the active hydrogen groups may be reacted with at least one alkylene oxide, such ethylene oxide or propylene oxide or a combination thereof; or a block of propylene oxide followed by a block of ethylene oxide, to form a polyether polyol by means within the skill in the art. The polyether initiator may be used as an initiator for reaction with at least one natural oil based monomer. Alternatively the initiator is reacted by means within the skill in the art to convert one or more hydroxyl groups to alternative active hydrogen groups, such as is propylene oxide.

Thus, in an embodiment, the natural oil based polyol may comprise at least two natural oil moieties separated by a molecular structure having at least about 19 ether groups or having an equivalent weight of at least about 400, preferably both. When the polyether initiator has more than 2 active hydrogen groups reactive with the natural oil or derivative thereof, each natural oil moiety is separated from another by an average of at least about 19 ether groups or a structure of molecular weight of at least about 400, preferably both.

The functionality of the resulting natural oil based polyols is above about 1.5 and generally not higher than about 6. In one embodiment, the functionality is below about 4. The hydroxyl number of the of the natural oil based polyols may be below about 300 mg KOH/g, preferably between about 50 and about 300, preferably between about 60 and about 200. In one embodiment, the hydroxyl number is below about 100.

The NOBPs may constitute between about 0 weight % and 100 % of the at least first polyol composition and/or the at least a second polyol composition. The NOBPs may constitute 0 weight % or at least about 1 weight %, 5 weight %, 10 weight %, 20 weight %, 30 weight %, or 50 weight %, 60 weight %, 70 weight %, 75 weight %, 80 weight %, 85 weight %, 90 weight %, 95 weight %, or 100% of the polyol formulation of at least the first polyol composition and/or the at least a second polyol composition. The NOBPs may constitute up to about 10 weight %, 20 weight %, 30 weight %, 40 weight %, 50 weight %, 60 weight %, 70 weight %, 75 weight %, 80 weight %, 85 weight %, 90 weight %, 95 weight %, or 100% of the polyol formulation of at least the first polyol composition and/or the at least a second polyol composition.

The polybutadiene based polyol (PBDP) may be a polyol having a number-average molecular weight of 500 to 50,000 and 1 to 10 hydroxyl groups per molecule (herein, the polyol is referred to as such even when there is only one hydroxyl group. The fabrication process of hydroxyl terminated polybutadiene is based on the free radical polymerization on of butadiene, initiated by hydrogen peroxide at 100-150 °C in the presence of a solvent such as: methanol, isopropanol, or in the presence of tricresyl phosphate. The polymerization in alcohols is often used industrially.

Examples of the PBDPs include polyols based on 1,4-repeating and/or 1,2 repeating units units such as POLY BD R-20LM (a 1300 molecular weight liquid hydroxyl terminated polymer of butadiene, available from Sartomer Company) and POLY BD R-45HTLO (a 2800 molecular weight liquid hydroxyl terminated polymer of butadiene having an OH number of 47.1, available from Sartomer Company).

Herein, as to the polybutadienes, "1,4-repeating units" and "1,2-repeating units" means a repeating units as shown the following formulae:

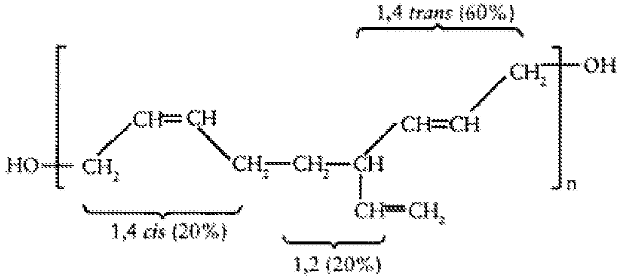

The polyol may have 1 to 10 hydroxyl groups, preferably 2 to 4 hydroxyl groups per molecule. Preferably, the PBDPs have a number-average molecular weight of 500 to 5,000 and 2 to 4 hydroxyl groups per molecule.

The PBDPs may constitute between about 0 weight % and 100 % of the at least first polyol composition and/or the at least a second polyol composition. The PBDPs may constitute 0 weight % or at least about 1 weight %, 5 weight %, 10 weight %, 20 weight %, 30 weight %, 50 weight %, 60 weight %, 70 weight %, 75 weight %, 80 weight %, 85 weight %, 90 weight %, 95 weight %, or 100% of the polyol formulation of at least the first polyol composition and/or the at least a second polyol composition. The PBDPs may constitute up to about 10 weight %, 20 weight %, 30 weight %, 40 weight %, 50 weight %, 60 weight %, 70 weight %, 75 weight %, 80 weight %, 85 weight %, 90 weight %, 95 weight %, or 100% of the polyol formulation of at least the first polyol composition and/or the at least a second polyol composition.

The at least a first polyol composition and the at least a second polyol composition may optionally include another kind of polyol, which includes at least one conventional petroleum-based polyol. Conventional petroleum-based polyols includes materials having at least one group containing an active hydrogen atom capable of undergoing reaction with an isocyanate, and not having parts of the material derived from a vegetable or animal oil. Suitable conventional petroleum-based polyols are well known in the art and include those described herein and any other commercially available polyol. Mixtures of one or more polyols and/or one or more polymer polyols may also be used to produce polyurethane products according to embodiments of the present invention.

Representative conventional petroleum-based polyols include polyether polyols, polyester polyols, polyhydroxy-terminated acetal resins, hydroxyl-terminated amines and polyamines. Alternative polyols that may be used include polyalkylene carbonate-based polyols and polyphosphate-based polyols. Preferred are polyols prepared by adding an alkylene oxide, such as ethylene oxide, propylene oxide, butylene oxide or a combination thereof, to an initiator having from 2 to 8, preferably 2 to 6 active hydrogen atoms. Catalysis for this polymerization can be either anionic or cationic, with catalysts such as KOH, CsOH, boron trifluoride, or a double cyanide complex (DMC) catalyst such as zinc hexacyanocobaltate or quaternary phosphazenium compound. The initiators suitable for the natural oil based polyols may also be suitable for the at least one conventional petroleum-based polyol.

The at least one conventional petroleum-based polyol may for example be poly(propylene oxide) homopolymers, random copolymers of propylene oxide and ethylene oxide in which the poly(ethylene oxide) content is, for example, from about 1 to about 30% by weight, ethylene oxide-capped poly(propylene oxide) polymers and ethylene oxide-capped random copolymers of propylene oxide and ethylene oxide. The polyether polyols may contain low terminal unsaturation (for example, less that 0.02 meq/g or less than 0.01 meq/g), such as those made using so-called double metal cyanide (DMC) catalysts. Polyester polyols typically contain about 2 hydroxyl groups per molecule and have an equivalent weight per hydroxyl group of about 400-1500.

The conventional petroleum-based polyols may be a polymer polyol. In a polymer polyol, polymer particles are dispersed in the conventional petroleum-based polyol. Such particles are widely known in the art an include styrene-acrylonitrile (SAN), acrylonitrile (ACN), polystyrene (PS), methacrylonitrile (MAN), or methyl methacrylate (MMA) particles. In one embodiment the polymer particles are SAN particles.

The optional conventional petroleum-based polyols may constitute at least about 1 weight %, 5 weight %, 10 weight %, 20 weight %, 30 weight %, or 50 weight % of the total polyol formulation. Furhtermore, the conventional petroleum-based polyols may constitute up to about 10 weight %, 20 weight %, 30 weight %, 40 weight %, 50 weight %, or 60 weight % of the total polyol formulation.

The at least a first polyol composition also includes at least one secondary diamine chain extender. For purposes of the embodiments of the invention, a chain extender is a material having two isocyanate-reactive groups per molecule and an equivalent weight per isocyanate-reactive group of less than 400, preferably less than 300 and especially from 31-125 daltons. Representative of suitable chain-extending agents include both aliphatic and aromatic secondary diamines.

Examples of aliphatic secondary diamines are N,N'-diisopropylethylenediamine, N,N'-di-sec-butyl-1,2-diaminopropane, N,N'-di(2-butenyl)-1,3-diaminopropane, N,N'-di(1-cyclopropylethyl)-1,5-diaminopentane, N,N'-di(3,3-dimethyl-2-butyl)-1,5-diamino-2-methylpentane, N,N'-di-sec-butyl-1,6-diaminohexane, N,N'-di(3-pentyl)-2,5-dimethyl-2,5-hexanediamine, N,N'-di(4-hexyl)-1,2-diaminocyclohexane, N,N'-dicyclohexyl-1,3-diaminocyclohexane, N,N'-di(1-cyclobutylethyl)-1,4-diaminocyclohexane, N,N'-di(2,4-dimethyl-3-pentyl)-1,3-cyclohexanebis(methylamine), N,N'-di(1-penten-3-yl)-1,4-cyclohexanebis(methylamine), N,N'-diisopropyl-1,7-diaminoheptane, N,N'-di-sec-butyl-1,8-diaminooctane, N,N'-di(2-pentyl)-1,10-diaminodecane, N,N'-di(3-hexyl)-1,12-diaminododecane, N,N'-di(3-methyl-2-cyclohexenyl)-1,2-diaminopropane, N,N'-di(2,5-dimethylcyclopentyl)-1,4-diaminobutane, N,N'-di(isophoryl)-1,5-diaminopentane, N,N'-di(menthyl)-2,5-dimethyl-2,5-hexanediamine, N,N'-di(undecyl)-1,2-diaminocyclohexane, N,N'-di-2-(4-methylpentyl)-isophoronediamine, N,N'-di(5-nonyl)-isophoronediamine, and N,N'-di(3,3-dimethyl-2-butyl)-1,6 diaminohexane, or combinations thereof.

Examples of aromtatic secondary diamines are N,N'-diisopropyl-2,2'-methylenebis(6-n-propylbenzeneamine), N,N'-di-sec-butyl-2,2'-methylenebis(3,6-di-n-propylbenzeneamine), N,N'-di(2,4-dimethylbenzyl)-2,2'-methylenebis(5,6-dihexylbenzeneamine), N,N'-diisopropyl-3,3'-methylenebis(2,6-di-n-butylbenzeneamine), N,N'-di(2,4-dimethyl-3-pentyl)-3,3'-methylenebis(2,6-di-n-butylbenzeneami- ne), N,N'-diisopropyl-4,4'-methylenebis(2,6-diethylbenzeneamine), N,N'-di-sec-butyl-4,4'-methylenebis(2,6-diethylbenzeneamine), N,N'-di(2-hexyl)-4,4'-methylenebis(2,6-diethylbenzeneamine), N,N'-di(1-naphthylethyl)-4,4'-methylenebis(2,6-diisopropylbenzeneamine), N,N'-dicyclobutyl-4,4'-methylenebis(2-isopropyl-6-methylbenzeneamine), N,N'-di(1-penten-3-yl)-4,4'-methylenebis(2-methyl-6-tert-butylbenzeneamin- e), N,N'-di-sec-butyl-4,4'-(1,2-ethanediyl)bis(2,6-diethylbenzeneamine), N,N'-di(1-cyclopentylethyl)-4,4'-(1,2-ethanediyl)bis(2,6-diethylbenzeneam- ine), N,N'-di(2-ethylbutyl)-4,4'-(1,2-ethanediyl)bis(2,6-diisopropylbenzen- eamine), N,N'-di(10-undecenyl)-2,2'-methylenebis(3,4,6-tripentylbenzeneami- ne), N,N'-di(4-heptyl)-3,3'-methylenebis(2,5,6-trihexylbenzeneamine), N,N'-dimenthyl-4,4'-methylenebis(2,3,6-trimethylbenzeneamine), N,N'-dibenzyl-4,4'-methylenebis(2,3,4,6-tetramethylbenzeneamine), 4,4'-methylene bis(n-sec butylaniline), and combinations thereof.

The chain extender may constitute between about 5 weight % and 80 % of the at least first polyol composition. The chain extender may constitute at least about 5 weight %, 10 weight %, 20 weight %, 30 weight %, 50 weight %, 60 weight %, or 70 weight % of the first polyol composition. The chain extender may constitute up to about 10 weight %, 20 weight %, 30 weight %, 40 weight %, 50 weight %, 60 weight %, or 70 weight %, 75 weight %, or 80 weight % of the first polyol composition.

In addition to the above described polyols, the polyol compositions may also include other ingredients such as catalysts, silicone surfactants, preservatives, and antioxidants.

In some embodiments of the the spray elastomer systems described herein, the at least first polyol composition and the at least a second polyol composition are substantially free of primary amine chain extender. By "substantially free of primary amine chain extender" is meant that no conscientious addition of a primary amine chain extender is performed during the formation of the spray elastomer systems, thus the spray elastomer formation is performed in the substantial absence of a primary diamine. However, it is possible that primary amine impurities may be present in the amounts of up to about 1 weight % of the total amount of polyols in the system. All subranges below 1 weight % are contemplated. For example, primary amine impurities may be present in an amount of at most about 0.001 weight percent, about 0.005 weight percent, about 0.01 weight percent, about 0.015 weight percent, about 0.05 weight percent, about 0.075, about 0.1 weight percent, about 0.2 weight percent, about 0.3 weight percent, about 0.4 weight percent, about 0.5 weight percent, about 0.6 weight percent, about 0.7 weight percent, about 0.8 weight percent, about 0.9 weight percent, or about 1 weight percent.

In other embodiments, the chain extender, in addition to secondary diamines, may include primary diamines, in an amount up to about 10 weight % of the first polyol composition. All subranges below 1 weight % are contemplated. For example, the first polyol composition may include between about 1 and 10 weight % primary diamine, between about 1 and 5 weight % diamine, or between about 2 and 5 weight % diamine. Suitable primary diamines include for example dimethylthiotoluenediamine (DMTDA) such as E-300 from Albermarle Corporation, diethyltoluenediamine (DETDA) such as E-100 Ethacure from Albermarle (a mixture of 3,5-diethyltoluene-2,4-diamine and 3,5-diethyltoluene-2,6-diamine), isophorone diamine (IPDA), and dimethylthiotoluenediamine (DMTDA).

The prepolymer composition may be made by reacting the at least one isocyanate and the at least second polyol composition. Suitable isocyanates for use in preparing the prepolyomer include a wide variety of organic mono- and polyisocyanates. Suitable monoisocyanates include benzyl isocyanate, toluene isocyanate, phenyl isocyanate and alkyl isocyanates in which the alkyl group contains from 1 to 12 carbon atoms. Suitable polyisocyanates include aromatic, cycloaliphatic and aliphatic isocyanates. Exemplary polyisocyanates include m-phenylene diisocyanate, toluene-2-4-diisocyanate, toluene-2-6-diisocyanate, isophorone diisocyanate, 1,3- and/or 1,4-bis(isocyanatomethyl)cyclohexane (including cis- or trans-isomers of either), hexamethylene-1,6-diisocyanate, tetramethylene-1,4-diisocyanate, cyclohexane-1,4-diisocyanate, hexahydrotoluene diisocyanate, methylene bis(cyclohexaneisocyanate) (H₁₂MDI), naphthylene-1,5-diisocyanate, methoxyphenyl-2,4-diisocyanate, diphenylmethane-4,4'-diisocyanate, 4,4'-biphenylene diisocyanate, 3,3'-dimethoxy-4,4'-biphenyl diisocyanate, 3,3'-dimethyl-4-4'-biphenyl diisocyanate, 3,3'-dimethyldiphenyl methane-4,4'-diisocyanate, 4,4',4"-triphenyl methane triisocyanate, a polymethylene polyphenylisocyanate (PMDI), toluene-2,4,6-triisocyanate and 4,4'-dimethyldiphenylmethane-2,2',5,5'-tetraisocyanate. In some embodiments, the polyisocyanate is diphenylmethane-4,4'-diisocyanate, diphenylmethane-2,4'-diisocyanate, PMDI, toluene-2,4-diisocyanate, toluene-2,6-diisocyanate or mixtures thereof. Diphenylmethane-4,4'-diisocyanate, diphenylmethane-2,4'-diisocyanate and mixtures thereof are generically referred to as MDI, and all may be used. Toluene-2,4-diisocyanate, toluene-2,6-diisocyanate and mixtures thereof are generically referred to as TDI, and all may be used.

Derivatives of any of the foregoing isocyanate groups that contain biuret, urea, carbodiimide, allophonate and/or isocyanurate groups may also be used. These derivatives often have increased isocyanate functionalities and are desirably used when a more highly crosslinked product is desired.

The proportions of the isocyanate and the at least second polyol composition are chosen to provide an isocyanate terminated prepolymer product. This can be accomplished by using excess stoichiometric amount of polyisocyanate, that is, more than one isocyanate group per active hydrogen group, preferably hydroxyl, amine and unreacted carboxyl group of the at least second polyol composition. The ratio of isocyanate groups to active hydrogen, more preferably hydroxyl and amine groups, on the at least second polyol composition is preferably at least about 1.0, 1.2. 1.4, 1.5, 1.7, or 1.8, and independently preferably at most about 10, preferably at most about 6, preferably at most about 3. Higher (that is stoichiometric amounts or excess) isocyanate levels are optionally used.

Reaction of the at least second polyol composition with the polyisocyanate can be catalyzed using at least one catalyst within the skill in the art for such reactions. Examples of urethane catalysts include tertiary amines such as triethylamine, 1,4-diazabicyclo[2.2.2.]octane (DABCO), N-methylmorpholine, N-ethylmorpholine, N,N,N',N'-tetramethylhexamethylenediamine, 1,2-dimethylimidazol; and tin compounds such as tin(II)acetate, tin(II)octanoate, tin(II)laurate, dibutyltin dilaurate, dibutyltin dimaleate, dioctyltin diacetate and dibutyltin dichloride. In one embodiment the catalyst is benzoyl chloride The catalysts are optionally used alone or as mixtures thereof. The reaction may be heated to temperatures between 20°C and 100°C, and may take 2-6 hours to complete.

The first polyol composition and the prepolymer composition may then be used to form a polyurethane product, such as a spray elastomer. The compositions of the first polyol composition and the second polyol composition of the prepolymer composition may be selected in numerous ways. For example, in one embodiment, all the polyols selected may be a NOBP, that is, the prepolymer may be made by reacting the isocyanate with only NOBPs, and that prepolymer may then be reacted with a poloyol side where all the polyols are NOBPs, which may be the same or different NOBP than was used to make the prepolymer. In an alternative embodiment, one or both of the first or second polyol compositions may also include a conventional petroleum-based polyol, such as a polyether polyol. In certain embodiments, the NOBP used in the first polyol composition may be a NOBP made by reacting the hydroxymethylated monomers with a first initiator, and the second polyol composition may be a NOBP made by reacting the hydroxymethylated monomers with a second initiator. In one embodiment, the first initiator may be an alkoxylated initator having a functionality of between about 2 and about 4, and the second initator may be a cycloaliphatic diol (such as UNOXOL). Alternatively, the NOBPs used in the first polyol composition may be a mixture of the first initiator made NOBPs and the second initiator made NOBPs, and/or the NOBPs used in the second polyol composition may be a mixture of the first initiator made NOBPs and the second initiator made NOBPs.

In other embodiments, For example, in one embodiment, all the polyols selected may be a PBDP, that is, the prepolymer may be made by reacting the isocyanate with only PBDPs, and that prepolymer may then be reacted with a poloyol side where all the polyols are PBDPs, which may be the same or different PBDPs than was used to make the prepolymer. Alternatively, first or second polyol compositions may include mixtures of PBDPs, NOBPs, and/or conventional polyols, in any combination possible.
The polyurethane/polyurea spray elastomer systems of the embodiments of the present invention may be prepared using plural component, high pressure, high temperature spray equipment. As known in the art, plural component equipment combines two components, an (a) component and a (b) component. The (a) component generally includes the isocyanate prepolymer, while the (b) component generally includes the first polyol composition. Other additives may also be included in the resin blend component as noted previously. The (a) component and the (b) component of the polyurethane/polyurea spray elastomer systems are preferably combined or mixed under high pressure. In a one embodiment, they are impingement mixed directly in the high-pressure spray equipment. This equipment for example includes: an Isotherm PSM 700 plural component metering system and SP 300H gun at 100-240°F, 100-200 bar and a #3 or #4 mixing module. The two components are mixed in a mixing chamber under high pressure inside the spray gun and both reactants are undergoing a turbulent, laminar mix process which yields the reaction mixture which is then applied to the desired substrate via the spray gun. The coating/lining system is formed when the reacting mixtures hits the substrate and wets it out to form a coherent coating or lining. The use of plural component spray equipment, however, is not critical to the present invention and is included only as one example of a suitable method for mixing the spray elastomers of the embodiments of the present invention.

The resulting spray elastomers may give higher Shore A and D (according to ASTM D 2240, Test Method for Rubber Property - Durometer Hardness), Tensile strength (according to ASTM D412 die C), Elongation break (ASTM D412 die C), and tear strength (ASTM D624 die C) values than comparative systems based on either PBDP and/or NOBP and using either primary amine extenders or mixtures of primary and secondary amines.

For example, PBDP based spray elastomers of the various embodiments herein may have a Shore A hardness of at least 90, 92, 95, 98, a Shore D hardness of at least about 40, 42, 45, 50, or 52, a Tensile strength of at least 2150, 2200, or 2240 psi, an elongation at break of at least 220, 240, 250, 260, 270, 280, or 290, and a Tear strength of at least 150. 200, 250, 325, 350, or 400 pli.

Furhtermore, NOBP based spray elastomers of the various embodiments herein may have a Shore A hardness of at least 85, 90, 92, 95, 98, a Shore D hardness of at least about 40, 42, 45, 50, or 52, a Tensile strength of at least 1250, 1300, 1350, 1400, 1420, 1450, 1500, or 1600 psi, an elongation at break of at least 75, 80, 85, or 90, and a Tear strength of at least 200, 250, 300, 349, 350, 400, or 433 pli.

### EXAMPLES

The following examples are provided to illustrate the embodiments of the invention, but are not intended to limit the scope thereof. All parts and percentages are by weight unless otherwise indicated.

The following materials were used:
- Benzoyl chloride: Available from Sigma-Aldrich Co
- BYK 067: A polysiloxane type defoaming agent. Available from BYK Additives & Instruments.
- DABCO 33-LV: A 33% solution of triethylenediamine in propylene glycol available from Air Products & Chemicals Inc.
- DABCO T-12: A tin catalyst available from Air Products.
- ETHACURE 90: A secondary aliphatic diamine, N,N'-di(3,3-dimethyl-2-butyl)-1,6 diaminohexane). Available from Albemarle Corporation.
- ETHACURE 100: A primary diamine curing agent consisting of a mixture of mostly 3,5-diethyltoluene-2,4-diamine and 3,5-diethyltoluene-2,6-diamine. Available from Albemarle Corporation.
- IPDA: Isophorone diamine, a primary diamine, available from BASF.
- ISONATE* 50 OP: A 50 percent 4,4'-methylene diphenyl isocyanate, 50 percent 2,4'-methylene diphenyl isocyanate mixture having a functionality of 2.0 and an equivalent weight of 125 g/equivalent available from The Dow Chemical Company.
- JEFFAMINE T-5000: A trifunctional polyetheramine with primary amines and approximately 5000 molecular weight. Available from Huntsman Corporation
- NOPB-A: NOBP A is a nominally 2.0-functional natural oil polyol prepared using hydroxymethylated fatty acid methyl ester monomers as described in U.S. Pat. No. 7,615,658. NOBP A is made by reacting the hydroxymethylated soybean fatty acid methyl ester monomers with an approximately 50/50% weight mixture of 1,3-cyclohexane dimethanol and 1,4-cyclohexane dimethanol (commercially available from The Dow Chemical Company under the trade designation UNOXOL),using 650 ppm stannous octoate (commercially available from City Chemical Co.) as the catalyst. NOBP-A has an average of approximately 2.0 hydroxyl groups/molecule, an OH number of 55, and number average molecular weight of about 2040.
- NOPB-B: Soybean oil based polyol prepared according to examples 19-22 of WO 2004/096882. The monomers are hydroxymethylated soybean fatty acid methyl esters and the initiator is a 625 molecular weight poly(ethylene oxide) triol used at a ratio of monomer to initiator of 4.1:1. The polyol has an OH number of 89.
- POLY BD R-20LM: A 1300 molecular weight liquid hydroxyl terminated polymer of butadiene, available from Sartomer Company .
- POLY BD R-45HTLO: A 2800 molecular weight liquid hydroxyl terminated polymer of butadiene having an OH number of 47.1. Available from Sartomer Company.
- POLYLINK 4200: An aromatic secondary diamine, 4,4'-methylene bis(n-sec butylaniline), available from The Hanson Group, LLC.
- VORATRON* EG 711: A zeolite moisture scavenger paste. It is 50% paste of L powder in castor oil. The L powder is a white powder with an approximate pore size of 3Å. Available from the Dow Chemical Company.
- *ISONATE and VORATRON: are trademarks of The Dow Chemical Company.

NOBP based isocyanate prepolymers, Comparative Example 1 (CE1) and Examples 1-2 (E1 and E2), and polyBD polyol based isocyanate prepolymers, Comparative Example 2 (CE2) and Examples 3 and 4 (E3 and E4), were prepared by a controlled reaction of an excess of the isocyanates with the polyol. The reaction was performed by stirring the isocyanate compounds and the benzoyl chloride and feeding the polyol into the reaction vessel at a controlled rate over 15-120 minutes, while maintaining the temperature in the vessel at about 60 - 85°C. After a total reaction time of about 3 hours, the isocyanate content was at the theoretical value. The prepolymer was unloaded after stopping the reaction by cooling.

PolyBD and NOP prepolymers and corresponding polyol mixtures were mixed via direct impingement and sprayed as two-component formulas through an Isotherm PSM 700 plural component metering system and SP 300H gun at 140-180°F (60-80°C), 125-160 bar (1500-2300 psi) and #3 or #4 mixing module. Target thickness for the materials was 2-3 mm.

The samples were then allowed to cure at least three days at room temperature before being tested for tensile strength and elongation at break using ASTM D412 die C, and tear strength using ASTM D624 die C. Testing was conducted on an Instron model 5566 using Bluehill software and an optical tracking system for measuring elongation. The median of at least three measurements was recorded. The hardness (Shore A and D) was measured according to ASTM D 2240, Test Method for Rubber Property - Durometer Hardness.

**Table 1**

| | | CE1 | E1 | E2 | CE2 | E3 | E4 |
|---|---|---|---|---|---|---|---|
| | | | | | | | |
| Polyol Side | ETHACURE 100 Curative | 24 | | | 20 | | |
| | IPDA | | | | | 4.25 | |
| | ETHACURE 90 | | | 42.25 | | | |
| | POLYLINK 4200 | | 46.25 | | | 31 | 38 |
| | NOPB-A | 58.9 | 53 | 57 | | | |
| | NOPB-B | 16.35 | | | | | |
| | POLY BD R-20LM | | | | 77.25 | 62 | 59.25 |
| | DABCO T-12: | 0.05 | 0.05 | 0.05 | 0.05 | 0.05 | 0.05 |
| | DABCO 33-LV: | 0.2 | 0.2 | 0.2 | 0.2 | 0.2 | 0.2 |
| | BYK 067 | 0.5 | 0.5 | 0.5 | 0.5 | 0.5 | 0.5 |
| | VORATRON* EG 711 | | | | 2 | 2 | 2 |
| | | | | | | | |
| Isocyanate Prepolymer | NOPB-A | 48.99 | 47.5 | 47.5 | | | |
| | ISONATE* 50 OP | 51 | 52.5 | 52.5 | 53 | 53 | 53 |
| | Benzoyl chloride | 0.01 | 0.01 | 0.01 | 0.01 | 0.01 | 0.01 |
| | POLY BD R-45HTLO | | | | 47 | 47 | 47 |
| | | | | | | | |
| Index | | 106 | 112 | 110 | 110 | 110 | 113 |
| Parts Isocyanate Prepolymer | | 104 | 105 | 106 | 106 | 106 | 106 |
| Parts Polyol Side | | 100 | 100 | 100 | 100 | 100 | 100 |
| | | | | | | | |
| Shore A | | 90 | 92 | 98 | 90 | 95 | 98 |
| Shore D | | 37 | 42 | 52 | 38 | 45 | 50 |
| Tensile strenght (psi) | | 1241 | 1424 | 1624 | 2132 | 2298 | 2240 |
| Elongation @ break (%) | | 70 | 90 | 70 | 210 | 280 | 290 |
| Tear (pli) | | 111 | 318 | 313 | 180 | 349 | 433 |

For the NOBP based sprayed systems, Comparative Example 1 (CE1) and Examples 1-2 (E1 and E2), it can be seen that Examples 1 and 2 which are made using a secondary amine chain extender gives higher Shore A and D, Tensile strength, and tear values than the Comparative Example 1 which is made using a primary amine chain extender. Furthermore, the Example made using POLYLINK 4200 (secondary diamine) gave a higher Elongation break value than the Example made using either ETHACURE 90(secondary diamine) or ETHACURE 100(primary diamine)

For the polyBD polyol based sprayed systems, Comparative Example 2 (CE2) and Examples 3 and 4 (E3 and E4), it can for example be seen that Example 4 which is made using a secondary amine chain extender gives higher Shore A and D, Tensile strength, Elongation break, and tear values than the Comparative Examples 2 which is made using a primary amine chain extender. Furthermore, Example 3 which is based on a blend of chain extenders including secondary amines (POLYLINK 4200) and primary amines (IPDA) gave higher values Shore A and D, Elongation break, and tear values than that of Comparative Example 2 (CE2).

While the foregoing is directed to embodiments of the present invention, other and further embodiments of the invention may be devised and the scope thereof is determined by the claims that follow.

## Claims

1. An elastomer comprising the reaction product of at least:
at least a first polyol composition, comprising at least one polybutadiene based polyol and at least one aliphatic or aromatic chain extender having at least two secondary amine groups;
at least a first isocyanate terminated prepolymer comprising the reaction product of at least one isocyanate and at least one second polyol composition comprising at least one polybutadiene based polyol; and
wherein the elastomer is a spray elastomer comprising both polyurethane and polyurea linkages, wherein the elastomer has at least one of a Shore A hardness of at least 95, a Shore D hardness of at least 40, a Tensile strength of at least 2200 psi, an elongation at break of at least 250 and a Tear strength of at least 200 pli.

2. The elastomer of claim 1, wherein the at least one polybutadiene based polyol is formed from conjugated butadiene and has at least two hydroxyl groups in the molecule, and has a number average molecular weight from 500 to 10,000 g /mol.

3. The elastomer of claim 2, wherein the polybutadiene based polyol is a diol.

4. The elastomer of any one of claims 1-3, wherein the at least one aliphatic or aromatic chain extender is at least one of N,N'-diisopropylethylenediamine, N,N'-di-sec-butyl-1,2-diaminopropane, N,N'-di(2-butenyl)-1,3-diaminopropane, N,N'-di(1-cyclopropylethyl)-1,5-diaminopentane, N,N'-di(3,3-dimethyl-2-butyl)-1,5-diamino-2-methylpentane, N,N'-di-sec-butyl-1,6-diaminohexane, N,N'-di(3-pentyl)-2,5-dimethyl-2,5-hexanediamine, N,N'-di(4-hexyl)-1,2-diaminocyclohexane, N,N'-dicyclohexyl-1,3-diaminocyclohexane, N,N'-di(1-cyclobutylethyl)-1,4-diaminocyclohexane, N,N'-di(2,4-dimethyl-3-pentyl)-1,3-cyclohexanebis(methylamine), N,N'-di(1-penten-3-yl)-1 ,4-cyclohexanebis(methylamine), N,N'-diisopropyl-1,7-diaminoheptane, N,N'-di-sec-butyl-1,8-diaminooctane, N,N'-di(2-pentyl)-1,10-diaminodecane, N,N'-di(3-hexyl)-1,12-diaminododecane, N,N'-di(3-methyl-2-cyclohexenyl)-1,2-diaminopropane, N,N'-di(2,5-dimethylcyclopentyl)-1,4-diaminobutane, N,N'-di(isophoryl)-1,5-diaminopentane, N,N'-di(methyl)-2,5-dimethyl-2,5-hexanediamine, N,N'-di(undecyl)-1,2-diaminocyclohexane, N,N'-di-2-(4-methylpentyl)-isophoronediamine, N,N'-di(5-nonyl)-isophoronediamine, and N,N'-di(3,3-dimethyl-2-butyl)-1,6 diaminohexane.

5. The elastomer of any one of claims 1-3, wherein the at least one aliphatic or aromatic chain extender is at least one of N,N'-diisopropyl-2,2'-methylenebis(6-n-propylbenzeneamine), N,N'-di-sec-butyl-2,2'-methylenebis(3,6-di-n-propylbenzeneamine), N,N'-di(2,4-dimethylbenzyl)-2,2'-methylenebis(5,6-dihexylbenzeneamine), N,N'-diisopropyl-3,3'-methylenebis(2,6-di-n-butylbenzeneamine), N,N'-di(2,4-dimethyl-3-pentyl)-3,3'-methylenebis(2,6-di-n-butylbenzeneami- ne), N,N'-diisopropyl-4,4'-methylenebis(2,6-diethylbenzeneamine), N,N'-di-sec-butyl-4,4'-methylenebis(2,6-diethylbenzeneamine), N,N'-di(2-hexyl)-4,4'-methylenebis(2,6-diethylbenzeneamine), N,N'-di(1-naphthylethyl)-4,4'-methylenebis(2,6-diisopropylbenzeneamine), N,N'-dicyclobutyl-4,4'-methylenebis(2-isopropyl-6-methylbenzeneamine), N,N'-di(1-penten-3-yl)-4,4'-methylenebis(2-methyl-6-tert-butylbenzeneamine), N,N'-di-sec-butyl-4,4'-(1,2-ethanediyl)bis(2,6-diethylbenzeneamine), N,N'-di(1-cyclopentylethyl)-4,4'-(1,2-ethanediyl)bis(2,6-diethylbenzeneamine), N,N'-di(2-ethylbutyl)-4,4'-(1,2-ethanediyl)bis(2,6-diisopropylbenzeneamine), N,N'-di(10-undecenyl)-2,2'-methylenebis(3,4,6-tripentylbenzeneamine), N,N'-di(4-heptyl)-3,3'-methylenebis(2,5,6-trihexylbenzeneamine), N,N'-dimethyl-4,4'-methylenebis(2,3,6-trimethylbenzeneamine), N,N'-dibenzyl-4,4'-methylenebis(2,3,4,6-tetramethylbenzeneamine), and 4,4'-methylene bis(n-sec butylaniline).

6. The elastomer of any one of claims 1-5, wherein the first and second polyol compositions are free of primary amine chain extender.

7. The elastomer of any one of claims 1-5, wherein the first polyol composition further comprises between 1 weight % and 5 weight % of a primary amine chain extender.

## Patentansprüche

1. Ein Elastomer, beinhaltend das Reaktionsprodukt von mindestens dem Folgenden:
mindestens einer ersten Polyolzusammensetzung, beinhaltend mindestens ein polybutadienbasiertes Polyol und mindestens einen aliphatischen oder aromatischen Kettenverlängerer mit mindestens zwei sekundären Amingruppen;
mindestens einem ersten isocyanatterminierten Präpolymer, beinhaltend das Reaktionsprodukt von mindestens einem Isocyanat und mindestens einer zweiten Polyolzusammensetzung, beinhaltend mindestens ein polybutadienbasiertes Polyol; und
wobei das Elastomer ein Sprühelastomer ist, das sowohl Polyurethan- als auch Polyharnstoffverknüpfungen beinhaltet, wobei das Elastomer mindestens eines von einer Shore-A-Härte von mindestens 95, einer Shore-D-Härte von mindestens 40, einer Zugfestigkeit von mindestens 2200 psi, einer Bruchdehnung von mindestens 250 und einer Reißfestigkeit von mindestens 200 pli aufweist.

2. Elastomer gemäß Anspruch 1, wobei das mindestens eine polybutadienbasierte Polyol aus konjugiertem Butadien gebildet ist und mindestens zwei Hydroxylgruppen im Molekül aufweist und ein Molekulargewicht im Zahlenmittel von 500 bis 10 000 g/mol aufweist.

3. Elastomer gemäß Anspruch 2, wobei das polybutadienbasierte Polyol ein Diol ist.

4. Elastomer gemäß einem der Ansprüche 1-3, wobei der mindestens eine aliphatische oder aromatische Kettenverlängerer mindestens eines von N,N'-Diisopropylethyleridiamin, N,N'-Di-sec-butyl-1,2-diaminopropan, N,N'-Di(2-butenyl)-1,3-diaminopropan, N,N'-Di(1-cyclopropylethyl)-1,5-diaminopentan, N,N'-Di(3,3-dimethyl-2-butyl)-1,5-diamino-2-methylpentan, N,N'-Di-sec-butyl-1,6-diaminohexan, N,N'-Di(3-pentyl)-2,5-dimethyl-2,5-hexandiamin, N,N'-Di(4-hexyl)-1,2-diaminocyclohexan, N,N'-Dicyclohexyl-1,3-diaminocyclohexan, N,N'-Di(1-cyclobutylethyl)-1,4-diaminocyclohexan, N,N'-Di(2,4-dimethyl-3-pentyl)-1,3-cyclohexanbis(methylamin), N,N'-Di(1-penten-3-yl)-1,4-cyclohexanbis(methylamin), N,N'-Diisopropyl-1,7-diaminoheptan, N,N'-Di-sec-butyl-1,8-diaminooctan, N,N'-Di(2-pentyl)-1,10-diaminodecan, N,N'-Di(3-hexyl)-1,12-diaminododecan, N,N'-Di(3-methyl-2-cyclohexenyl)-1,2-diaminopropan, N,N'-Di(2,5-dimethylcyclopentyl)-1,4-diaminobutan, N,N'-Di(isophoryl)-1,5-diaminopentan, N,N'-Di(methyl)-2,5-dimethyl-2,5-hexandiamin, N,N'-Di(undecyl)-1,2-diaminocyclohexan, N,N'-Di-2-(4-methylpentyl)-isophorondiamin, N,N'-Di(5-nonyl)-isophorondiamin und N,N'-Di(3,3-dimethyl-2-butyl)-1,6-diaminohexan ist.

5. Elastomer gemäß einem der Ansprüche 1-3, wobei der mindestens eine aliphatische oder aromatische Kettenverlängerer mindestens eines von N,N'-Diisopropyl-2,2'-methylenbis(6-n-propylbenzenamin), N,N'-Di-sec-butyl-2,2'-methylenbis(3,6-di-n-propylbenzenamin), N,N'-Di(2,4-dimethylbenzyl)-2,2'-methylenbis(5,6-dihexylbenzenamin), N,N'-Diisopropyl-3,3'-methylenbis(2,6-di-n-butylbenzenamin), N,N'-Di(2,4-dimethyl-3-pentyl)-3,3'-methylenbis(2,6-di-n-butylbenzenamin), N,N'-Düsopropyl-4,4'-methylenbis(2,6-diethylbenzenamin), N,N'-Di-sec-butyl-4,4'-methylenbis(2,6-diethylbenzenamin), N,N'-Di(2-hexyl)-4,4'-methylenbis(2,6-diethylbenzenamin), N,N'-Di(1-naphthylethyl)-4,4'-methylenbis(2,6-düsopropylbenzenamin), N,N'-Dicyclobutyl-4,4'-methylenbis(2-isopropyl-6-methylbenzenamin), N,N'-Di(1-penten-3-yl)-4,4'-methylenbis(2-methyl-6-tert-butylbenzenamin), N,N'-Di-sec-butyl-4,4'-(1,2-ethandiyl)bis(2,6-diethylbenzenamin), N,N'-Di(1-cyclopentylethyl)-4,4'-(1,2-ethandiyl)bis(2,6-diethylbenzenamin), N,N'-Di(2-ethylbutyl)-4,4'-(1,2-ethandiyl)bis(2,6-diisopropylbenzenamin), N,N'-Di(10-undecenyl)-2,2'-methylenbis(3,4,6-tripentylbenzenamin), N,N'-Di(4-heptyl)-3,3'-methylenbis(2,5,6-trihexylbenzenamin), N,N'-Dimethyl-4,4'-methylenbis(2,3,6-trimethylbenzenamin), N,N'-Dibenzyl-4,4'-methylenbis(2,3,4,6-tetramethylbenzenamin) und 4,4'-Methylenbis(n-sec-butylanilin) ist.

6. Elastomer gemäß einem der Ansprüche 1-5, wobei die erste und zweite Polyolzusammensetzung frei von Kettenverlängerer mit primärem Amin sind.

7. Elastomer gemäß einem der Ansprüche 1-5, wobei die erste Polyolzusammensetzung ferner zu zwischen 1 Gew.-% und 5 Gew.-% einen Kettenverlängerer mit primärem Amin beinhaltet.

## Revendications

1. Un élastomère comprenant le produit réactionnel d'au moins :
au moins une première composition de polyol, comprenant au moins un polyol à base de polybutadiène et au moins un allongeur de chaîne aliphatique ou aromatique ayant au moins deux groupes amine secondaires ;
au moins un premier prépolymère à terminaison isocyanate comprenant le produit réactionnel d'au moins un isocyanate et au moins une deuxième composition de polyol comprenant au moins un polyol à base de polybutadiène ; et
l'élastomère étant un élastomère en pulvérisation comprenant à la fois des liaisons de polyuréthane et de polyurée, l'élastomère ayant au moins un élément parmi une dureté Shore A d'au moins 95, une dureté Shore D d'au moins 40, une résistance à la traction d'au moins 2 200 psi, un allongement à la rupture d'au moins 250 et une résistance au déchirement d'au moins 200 pli.

2. L'élastomère de la revendication 1, dans lequel l'au moins un polyol à base de polybutadiène est formé à partir de butadiène conjugué et a au moins deux groupes hydroxyle dans la molécule, et a une masse moléculaire moyenne en nombre allant de 500 à 10 000 g/mol.

3. L'élastomère de la revendication 2, dans lequel le polyol à base de polybutadiène est un diol.

4. L'élastomère de n'importe laquelle des revendications 1 à 3, dans lequel l'au moins un allongeur de chaîne aliphatique ou aromatique est au moins un élément parmi la N,N'-diisopropyléthylènediamine, le N,N'-di-sec-butyl-1,2-diaminopropane, le N,N'-di(2-butényl)-1,3-diaminopropane, le N,N'-di(1-cyclopropyléthyl)-1,5-diaminopentane, le N,N'-di(3,3-diméthyl-2-butyl)-1,5-diamino-2-méthylpentane, le N,N'-di-sec-butyl-1,6-diaminohexane, la N,N'-di(3-pentyl)-2,5-diméthyl-2,5-hexanediamine, le N,N'-di(4-hexyl)-1,2-diaminocyclohexane, le N,N'-dicyclohexyl-1,3-diaminocyclohexane, le N,N'-di(1-cyclobutyléthyl)-1,4-diaminocyclohexane, le N,N'-di(2,4-diméthyl-3-pentyl)-1,3-cyclohexanebis(méthylamine), la N,N'-di(1-pentèn-3-yl)-1,4-cyclohexanebis(méthylamine), le N,N'-diisopropyl-1,7-diaminoheptane, le N,N'-di-sec-butyl-1,8-diaminooctane, le N,N'-di(2-pentyl)-1,10-diaminodécane, le N,N'-di(3-hexyl)-1,12-diaminododécane, le N,N'-di(3-méthyl-2-cyclohexényl)-1,2-diaminopropane, le N,N'-di(2,5-diméthylcyclopentyl)-1,4-diaminobutane, le N,N'-di(isophoryl)-1,5-diaminopentane, du N,N'-di(méthyl)-2,5-diméthyl-2,5-hexanediamine, le N,N'-di(undécyl)-1,2-diaminocyclohexane, la N,N'-di-2-(4-méthylpentyl)-isophoronediamine, la N,N'-di(5-nonyl)-isophoronediamine, et le N,N'-di(3,3-diméthyl-2-butyl)-1,6 diaminohexane.

5. L'élastomère de n'importe laquelle des revendications 1 à 3, dans lequel l'au moins un allongeur de chaîne aliphatique ou aromatique est au moins un élément parmi la N,N'-diisopropyl-2,2'-méthylènebis(6-n-propylbenzèneamine), la N,N'-di-sec-butyl-2,2'-méthylènebis(3,6-di-n-propylbenzèneamine), la N,N'-di(2,4-diméthylbenzyl)-2,2'-méthylènebis(5,6-dihexylbenzèneamine), la N,N'-diisopropyl-3,3'-méthylènebis(2,6-di-n-butylbenzèneamine), la N,N'-di(2,4-diméthyl-3-pentyl)-3,3'-méthylènebis(2,6-di-n-butylbenzèneamine), la N,N'-diisopropyl-4,4'-méthylènebis(2,6-diéthylbenzèneamine), la N,N'-di-sec-butyl-4,4'-méthylènebis(2,6-diéthylbenzèneamine), la N,N'-di(2-hexyl)-4,4'-méthylènebis(2,6-diéthylbenzèneamine), la N,N'-di(1-naphtyléthyl)-4,4'-méthylènebis(2,6-diisopropylbenzèneamine), la N,N'-dicyclobutyl-4,4'-méthylènebis(2-isopropyl-6-méthylbenzèneamine), la N,N'-di(1-pentèn-3-yl)-4,4'-méthylènebis(2-méthyl-6-tert-butylbenzèneamine), la N,N'-di-sec-butyl-4,4'-(1,2-éthanediyl)bis(2,6-diéthylbenzèneamine), la N,N'-di(1-cyclopentyléthyl)-4,4'-(1,2-éthanediyl)bis(2,6-diéthylbenzèneamine), la N,N'-di(2-éthylbutyl)-4,4'-(1,2-éthanediyl)bis(2,6-düsopropylbenzèneamine), la N,N'-di(10-undécényl)-2,2'-méthylènebis(3,4,6-tripentylbenzèneamine), la N,N'-di(4-heptyl)-3,3'-méthylènebis(2,5,6-trihexylbenzèneamine), la N,N'-diméthyl-4,4'-méthylènebis(2,3,6-triméthylbenzèneamine), la N,N'-dibenzyl-4,4'-méthylènebis(2,3,4,6-tétraméthylbenzèneamine), et la 4,4'-méthylène bis(n-sec butylaniline).

6. L'élastomère de n'importe laquelle des revendications 1 à 5, dans lequel les première et deuxième compositions de polyol sont dépourvues d'allongeur de chaîne d'amine primaire.

7. L'élastomère de n'importe laquelle des revendications 1 à 5, dans lequel la première composition de polyol comprend en outre entre 1 % en poids et 5 % en poids d'un allongeur de chaîne d'amine primaire.
